(19) Europäisches Patentamt
European Patent Office
Office européen des brevets

(11) EP 0 718 343 B1

(12) **EUROPEAN PATENT SPECIFICATION**

(45) Date of publication and mention of the grant of the patent:
**27.08.2003 Bulletin 2003/35**

(51) Int Cl.7: **C08G 73/18**, C09D 179/04

(21) Application number: **95120287.8**

(22) Date of filing: **21.12.1995**

# (54) Metallic part coated with polybenzimidazole and process for the production of the same

Metallischer Gegenstand beschichtet mit Polybenzimidazol und dessen Verfahren zur Herstellung

Partie métallique recouverte du polybenzimidazole et son procédé de production

(84) Designated Contracting States:
**DE FR GB**

(30) Priority: **22.12.1994 JP 32040694**

(43) Date of publication of application:
**26.06.1996 Bulletin 1996/26**

(73) Proprietor: **Clariant Finance (BVI) Limited
Road Town, Tortola (VG)**

(72) Inventors:
- **Murata, Makoto,
Hoechst Ind. Ltd. Adv. Tech. Lab.
Saitama (JP)**
- **Itoh, Hiromi
Ogasa-gun, Shizuoka (JP)**

(74) Representative: **Kachholz, Traudel, Dr.
Clariant GmbH
Patente, Marken, Lizenzen
Am Unisys-Park 1
65843 Sulzbach (DE)**

(56) References cited:
**EP-A- 0 566 148** **US-A- 4 877 849**

- **PATENT ABSTRACTS OF JAPAN vol. 18, no. 182 (C-1184), 29 March 1994 & JP-A-05 339401 (HOECHST JAPAN LTD)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

Technical Field

This invention relates to a metallic part which is coated with a polymer and usable in various industrial products.

Background Art

As heat-resistant coating materials for electric wires, etc., there have been employed polyesters, polyamideimide, polyimide, etc. Also, fluoroplastics, a typical example of which is polytetrafluoroethylene, have been frequently used in modifying the surface properties (for example, lowering surface energy) of metallic materials. However, the recent trends toward downsized and high-performance instruments make it necessary to develop a coating material having an elevated heat resistance or an improved strength.

Polybenzimidazoles are heterocyclic polymers which are stable thermally and chemically. Thus it is expected that polybenzimidazoles are superior to other polymeric coating materials in heat resistance and surface hardness. The present applicant has proposed a process for forming a polybenzimidazole solution for coating and its application to various products is now under discussion [JP (Kokai) No. Hei 5-339401].

EP-A-0 566 148 discloses an electric wire coated with a varnish containing polybenzimidazole. The varnish forms an insulating covering on the wire.

Although there is a good possibility that polybenzimidazoles are usable as novel coating materials as described above, they suffer from troubles in the electrical properties due to the high moisture absorptions (i.e., 10% by weight or above) compared with other resins commonly employed in the art.

It is known that an imidazole N-H bond of a polybenzimidazole would undergo a reaction under specific conditions as described in USP Nos. 3578644, 4020142, 4579915, 4599388, 4814399, 4814400, 4868249, 4877849, 4898917, 4933397, 4997892, etc. The major objects of these patents are to improve the chemical resistance and heat resistance of a polybenzimidazole by the substitution of the highly reactive hydrogen atom in the above-mentioned imidazole N-H bond for a less reactive substituent, and to impart a novel function to a polybenzimidazole by the substitution of the hydrogen atom in the imidazole N-H bond for a substituent having, for example, specific nonlinear characteristics.

Disclosure of the Invention

As the results of extensive studies, the present inventor has found out that the moisture absorption of a polybenzimidazole can be lowered and thus excellent electrical insulation properties can be achieved by the substitution of the hydrogen atom in the above-mentioned imidazole N-H bond for a hydrophobic substituent.

The present invention has been completed based on this finding. Accordingly, the present invention provides a metallic part coated with a film which contains a polymer having a repeating unit represented by the following structural formula (I):

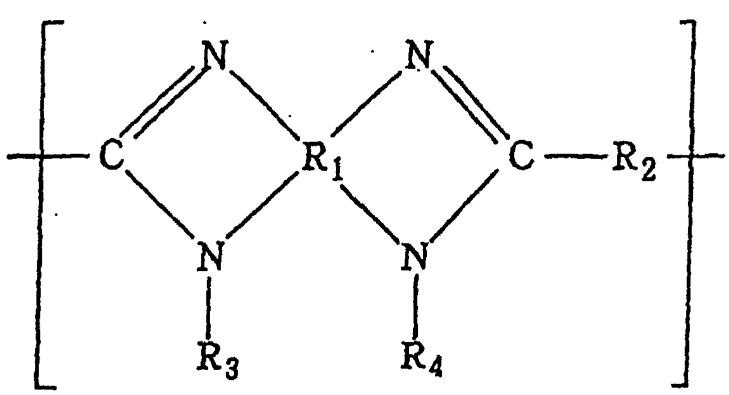

(I)

wherein $R_1$s represent a tetravalent aromatic nucleus which is symmetrically substituted by nitrogen atoms; $R_2$s represent a divalent group selected from among aliphatic, alicyclic and aromatic radicals having from 2 to 20 carbon atoms; each $R_3$ is independently selected from among a hydrogen atom and hydrophobic groups (for example, alkyl and aryl

groups) which may contain halogen atoms, silicon atoms, an amino group, or which hydrophobic groups are linked to the nitrogen atom(s) through a divalent group -CO- or -O-;
and each $R_4$ is independently selected from among a hydrogen atom and hydrophobic groups (for example, alkyl and aryl groups) which may contain halogen atoms, silicon atoms, an amino group, or which hydrophobic groups are linked to the nitrogen atom(s) through a divalent group -CO- or -O-;
provided that all of $R_3$s and $R_4$s do not represent hydrogen atoms at the same time; and/or a polymer having a repeating unit represented by the following structural formula (II):

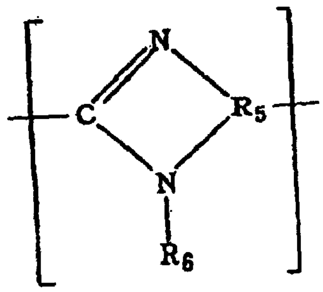

(II)

wherein $R_5$s represent an aromatic nucleus having nitrogen atoms which form a benzimidazole ring in combination with the adjacent carbon atoms of the aromatic nucleus; and each $R_6$ is independently selected from among a hydrogen atom and hydrophobic groups (for example, alkyl and aryl groups) which may contain halogen atoms, silicon atoms, an amino group, or which hydrophobic groups are linked to the nitrogen atom(s) through a divalent group -CO- or -O-; provided that all $R_6$s do not represent hydrogen atoms at the same time, excluding polybenzimidazole membranes on a porous steel plate.

The present invention further provides a metallic part coated with a film which contains a polymer having a repeating unit represented by structural formula (I) wherein $R_1$s and $R_2$s are defined above; and $R_3$, $R_4$ and/or $R_6$ are a fluoroalkyl group having from 1 to 4 carbon atoms.

The present invention further provides a process for producing a metallic part characterized by forming a film directly or indirectly on a metallic part, wherein said film contains a polymer having a repeating unit represented by the structural formula (I) which is obtained by reacting a compound represented by the following structural formula (IV):

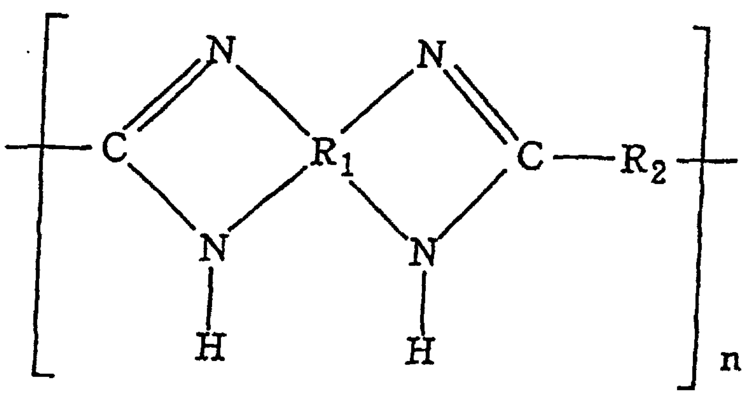

(IV)

wherein $R_1$ and $R_2$ are as defined above, and n represents an integer of 2 or above; with a pyrocarbonate represented by the following structural formula (V):

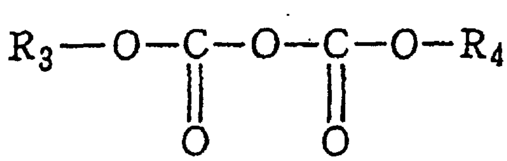

(V)

wherein each $R_3$ and $R_4$ are as defined above do not represent hydrogen atoms at the same time, or a polymer having a repeating unit represented by the structural formula (II) which is obtained by reacting a compound represented by the following structural formula (VI):

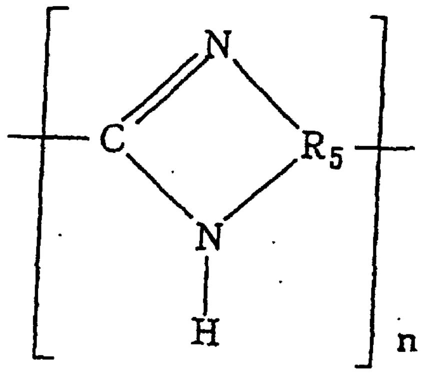

(VI)

wherein $R_5$s represent an aromatic nucleus having nitrogen atoms which form a benzimidazole ring in combination with the adjacent carbon atoms of the aromatic nucleus; and n represents an integer of 2 or above; with a pyrocarbonate represented by the following structural formula (VII):

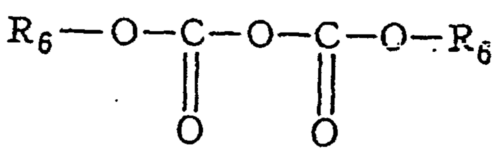

(VII)

wherein each $R_6$ is as defined above, provided that all $R_6$s constituting the repeating unit do not represent hydrogen atoms at the same time.

In addition, the present invention provides a process for producing a metallic part characterized by using a solution of a polymer which is obtained by reacting a compound represented by the structural formula (IV) with a pyrocarbonate represented by the structural formula (V) and represented by the following structural formula (VIII):

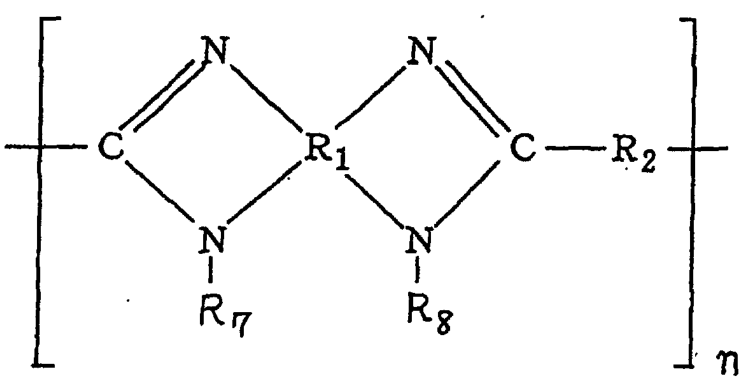

(VIII)

wherein $R_1$ and $R_2$ is as defined above; and each $R_7$ and $R_8$ is independently selected from among a hydrogen atom and -COOR groups wherein R represents a hydrophobic group (for example, an alkyl or aryl group) which may contain halogen atoms, an amino group, or silicon atoms, and n represents an integer of 2 or above, provided that all of $R_7$s and $R_8$s do not represent hydrogen atoms at the same time; or a polymer which is obtained by reacting a compound represented by the structural formula (VI) with a pyrocarbonate represented by the structural formula (VII) and represented by the following structural formula (IX):

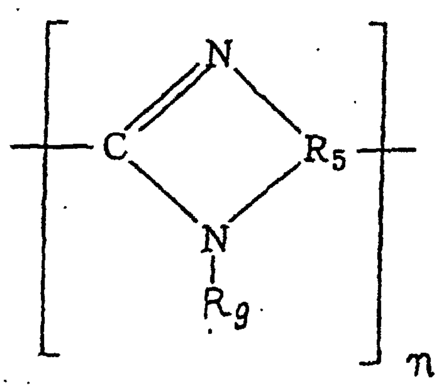

(IX)

wherein $R_5$s represent an aromatic nucleus having nitrogen atoms which form a benzimidazole ring in combination with the adjacent carbon atoms of the aromatic nucleus; each $R_9$ is independently selected from among a hydrogen atom and -COOR groups wherein R represents a hydrophobic group (for example, an alkyl or aryl group) which may contain halogen atomes, an amino group, or silicon atoms; and n represents an integer of 2 or above, provided that all $R_9$s constituting the repeating unit do not represent hydrogen atoms at the same time; forming a film of said polymer on a metallic part and then thermally treating the metallic part thus coated with the polymer film to thereby form a film of a polymer having a repeating unit represented by the structural formula (I) or a polymer having a repeating unit represented by the structural formula (II).

Best Mode for Carrying Out the Invention

In each of the polymers represented by the structural formulae (I), (II), (IV), (VI), (VIII) and (IX) employed in the present invention, the groups $R_1$s, $R_2$s and $R_5$s, from among the groups constituting the repeating unit, may be the same as each other, or may vary from repeating unit to repeating unit. The groups $R_3$s, $R_4$s, $R_6$s, $R_7$s, $R_8$s and $R_9$s are each independently selected from among those as defined above. That is to say, the polymer may carry the $R_3$, $R_4$, $R_6$, $R_7$, $R_8$ and $R_9$ groups, each selected from the above-mentioned ones, at random. However it is to be understood that the present invention excludes the following cases: all of $R_3$s and $R_4$s are hydrogen atoms; all $R_6$s are hydrogen atoms; all of $R_7$s and $R_8$s are hydrogen atoms; and all $R_9$s are hydrogen atoms. Thus it is possible that, among the $R_3$ groups constituting a polymer, for example, some are hydrogen atoms while others are different groups, which applies to $R_4$, $R_6$, $R_7$, $R_8$ and $R_9$ groups too.

A polymer to be used in the present invention has an inherent viscosity of at least 0.2, preferably ranging from 0.5 to 1.2. The term "inherent viscosity" means the viscosity of a solution of 0.4 g of a polymer in 100 ml of 97% conc. sulfuric acid measured at 25°C.

Particular examples of the substituents of the compounds of the present invention are as follows.

$R_1$ is not particularly restricted, so long as it is a tetravalent aromatic nucleus symmetrically substituted by nitrogen atoms. Preferable examples thereof are as follows.

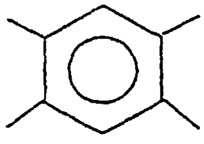
,
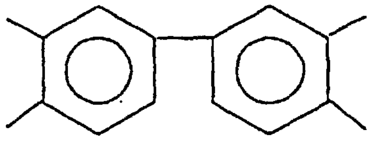
,
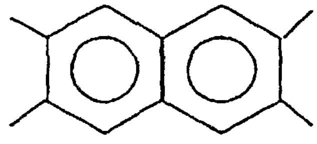
,

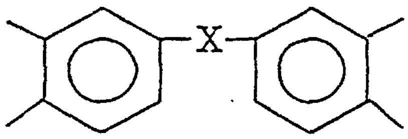

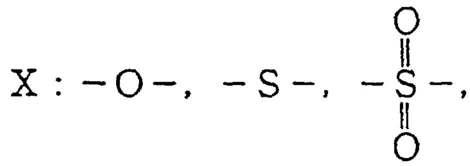

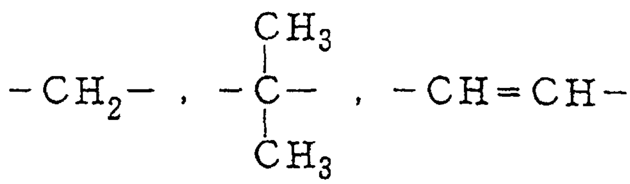

$R_2$ may be arbitrarily selected from among divalent aliphatic, alicyclic and aromatic groups having 2 to 20 carbon atoms. Examples of the divalent aliphatic groups include $-CH_2-$, $-C_2H_4-$, $-C_3H_6-$, $-C(CH_3)_2-$, $-C_4H_8-$, -CH=CH-, $-CH=CH-CH_2-$ and $-C \equiv C-$ groups. Examples of the divalent alicyclic groups include those prepared by eliminating two hydrogen atoms from cyclopropane or cyclohexane. In the case of a divalent group derived from cyclohexane, the binding sites may be located at any of o-, m- and p-positions. Examples of the divalent aromatic groups are as follows.

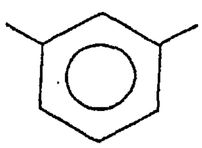 , 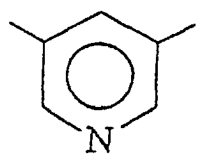 , 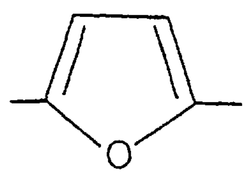 ,

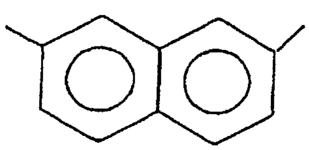 , 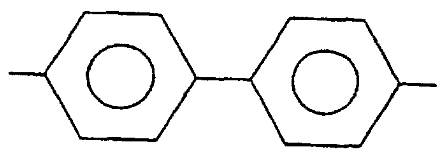

$R_3$ is selected from among a hydrogen atom and hydrophobic groups (for example, alkyl and aryl groups). $R_4$ is selected from among a hydrogen atom and hydrophobic groups (for example, alkyl and aryl groups). However, all of $R_3$s and $R_4$s constituting the repeating unit of the polymer do not represent hydrogen atoms at the same time. Similarly, $R_6$ is selected from among a hydrogen atom and hydrophobic groups (for example, alkyl and aryl groups). However, all $R_6$s constituting the repeating unit of the polymer do not represent hydrogen atoms at the same time. In these cases, the hydrophobic groups such as alkyl and aryl groups may be substituted by one or more groups on carbon atom(s). Examples of preferable alkyl groups include alkyl groups having 1 to 4 carbon atoms (for example, methyl, ethyl and t-butyl groups). Preferable examples of the aryl groups include phenyl and naphthyl groups which may be substituted by, for example, lower alkyl groups such as methyl and ethyl groups. Preferable examples of substituents which a hydrophobic group may have include halogen atoms and an amino group.

Examples of preferable substituted hydrophobic groups include fluoroalkyl groups having 1 to 4 carbon atoms (for example, trifluoromethyl and hexafluoriisopropyl groups) or aryl groups including the fluoroalkyl groups. In the present invention, it is particularly preferable to use substituents containing fluorine atoms (for example, trifluoromethyl and hexafluoroisopropyl groups) and those containing silicon atoms (for example, those carrying siloxane bonds). It is highly interesting that novel functions of, for example, reducing surface energy and lowering coefficient of friction can be imparted to the polymer by using these substituents. The hydrophobic groups $R^3$, $R^4$ and $R^6$ that are linked to the nitrogen atom(s) through a divalent group such as -C-O- and -O- are also included in the definition of the substituted hydrophobic groups.

$R_5$ is an aromatic nucleus having nitrogen atoms which form a benzimidazole ring in combination with the adjacent carbon atoms of the aromatic nucleus. Particular examples thereof are as follows.

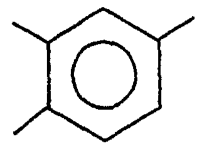

The polymers having the repeating unit of the structural formulae (I) and (II) to be used in the present invention have each a number-average molecular weight of from 2,000 to 1,000,000, preferably from 20,000 to 200,000.

The substitution by the hydrophobic groups to be used in the present invention may be carried out by an arbitrary method without restriction. For example, use can be made of the methods described in the USPs as cited above therefor. Among all, preferable examples of the substitution method usable in the present invention include a method described in USP No. 4877849 wherein a pyrocarbonate is used; one described in USP No. 4020142 wherein an acid anhydride and an acid chloride are used; and one described in USP No. 4898917 wherein an alkyl halide is used. In addition, it is well known to use a reaction between an epoxy group and an amine, though this method is not described in the USPs cited above.

The most desirable substitution method to be used in the present invention is the one described in USP No. 4877849 wherein a pyrocarbonate is used. This method is advantageous in that side-products such as carbon dioxide and lower alcohols can be easily eliminated by a heat treatment aiming at drying the film and that a high degree of substitution (50 to 90%) can be achieved. The largest characteristic of this method resides in that the reaction proceeds via an intermediate structure represented by the following structural formula (VIII) or (IX) which is highly soluble in organic solvents.

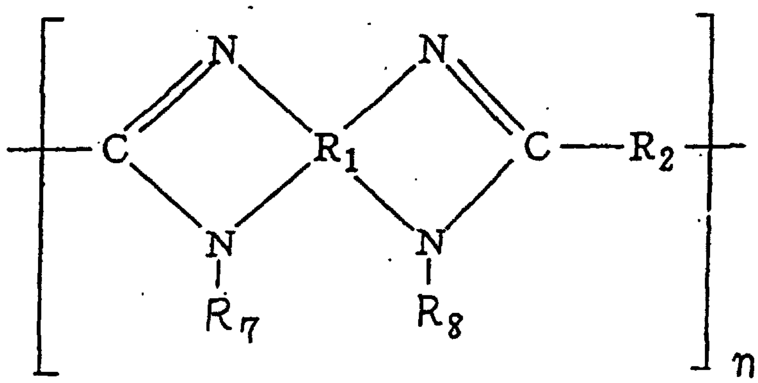

(VIII)

wherein n, $R_1$, $R_2$, $R_7$ and $R_8$ are as defined above provided that all of $R_7$s and $R_8$s constituting the repeating unit do not represent hydrogen atoms at the same time,

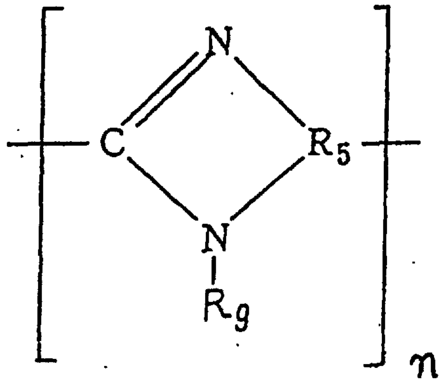

(IX)

wherein $R_5$, $R_9$ and n is as defined above.

In general, a polybenzimidazole, wherein the hydrogen in an imidazole N-H bond has been substituted by a hydrophobic group, has a poor solubility in organic solvents. In particular, one having a high degree of substitution cannot be prepared into a solution. Thus there is no means usable for forming a film of such a polybenzimidazole. In contrast, a film can be formed from a solution of the polymer represented by the above-mentioned structural formula (VIII) or (IX) which is obtained by this substitution method and highly soluble in organic solvents. Next, the film is thermally treated to thereby give a polybenzimidazole of the above-mentioned structural formula (I) or (II) wherein the hydrogen atom in the imidazole N-H bond has been substituted by a hydrophobic group. Thus a film can be formed even though the polybenzimidazole has a high degree of substitution.

The preferable degree of substitution of the polymer to be used in the present invention generally ranges from 10 to 90%. More particularly, it may be determined by taking the physical properties (electrical insulation properties, tensile elongation at break, etc.) of the film into consideration. When the degree of substitution is less than 10%, the substituent cannot fully exert its effect and thus only poor electrical insulation properties can be achieved. However, sufficient results can be obtained even at a low degree of substitution of about 0.1 to 1% in the case of a substituent containing a fluorine atom which has a highly hydrophobic nature or a substituent containing a siloxane bond which has a high molecular weight. On the other hand, it is not preferable that the degree of substitution exceeds 90%, since the physical properties are deteriorated (for example, a decrease in the tensile elongation at break) and thus the coated metallic part suffers from deterioration in bending strength (for example, flexing resistance). However, such a high degree of substitution is effective in the case of a substituent having a small bulkiness.

The above-mentioned "degree of substitution (%)" is defined as follows.

$$\text{Degree of substitution} = \frac{(\text{N-linked R is other than H})}{(\text{N-linked R is H}) + (\text{N-linked R is other than H})} \times 100$$

wherein

(N-linked R is other than H) means the total number of moles of structural formula (I) and/or structural formula (II), in which the substituents $R_3$, $R_4$ and/or $R_6$ are other than a hydrogen atom, obtained by dividing the mass of a polymer by the molecular weight per such a repeating unit (I) or (II); and

(N-linked R is H) means the total number of moles of structural formula (I) and/or structural formula (II), in which the substituents $R_3$, $R_4$ and/or $R_6$ are a hydrogen atom, obtained by dividing the mass of a polymer by the molecular weight per such a repeating unit (I) or (II).

The degree of substitution can be controlled mainly by reacting a compound of structural formula (IV) or (VI) with a compound, pyrocarbonate of structural formula (V) or (VII), which has substituents that correspond to the number of moles by which the desirable degree of substitution can be obtained. Secondarily the degree of substitution can also be controlled by changing reaction conditions such as reaction temperature and reaction time.

For example, in order to obtain a polymer having a repeating unit represented by structural formula (I) which has 30% of the degree of substitution, the pyrocarbonate of structural formula (V) that has the number of moles which satisfy the following equation:

$$\left(\frac{W}{M}\times 2\right) \times 0.3 = \frac{w}{m}$$

in which

M is a molecular weight per repeating unit of a polymer of structural formula (I),
W is the mass of the polymer,
m is the molecular weight of a compound of structural formula (V) or (VII), and
w is the mass of the compound.

The present invention is embodied by coating a metallic part with a solution of a polymer, wherein the hydrogen atom in an imidazole N-H bond has been substituted by a hydrophobic group, or a precursor polymer, which can be converted into the above-mentioned polymer by heating, either directly or via another coating film. As the solvent, use is mainly made of polar solvents such as N,N-dimethylformamide, N,N-dimethylacetamide and N-methyl-2-pyrrolidone. Although the concentration of the solution is not particularly restricted, it is preferable that the weight ratio of the polymer to the total weight of the solution ranges from 5 to 20% in order to give a solution having a viscosity suitable for the film formation. When a polymer having an inherent viscosity of 0.8 is employed, a solution of a viscosity of about 10 cp can be obtained by regulating the concentration to 5% by weight, while a solution of a viscosity of about 2000 cp can be obtained by regulating the concentration to 20% by weight. The polymer solution to be used in the present invention may further contain fillers as internal additives, integrating resinous substances, etc., if necessary. The addition of the internal fillers makes it possible to improve, for example, the self-lubricating properties of the obtained film. On the other hand, the addition of the integrating resinous substances makes it possible to improve the elasticity and surface hardness of the obtained film. By improving the elasticity and surface hardness, a freedom can be imparted to the surface of the film which comes in contact with other material. Examples of such integrating resinous substances include silicone resins, fluoroplastics such as PTFE and fluorine-containing monomers.

In the present invention, the metallic part to be coated with a film containing a polymer is restricted neither in material nor in shape. Metallic parts made of various metals such as aluminum, copper, stainless and nichrome and alloys of these metals are mainly employed therefor. Moreover, these metallic parts may be coated with a film of, for example, various coatings, polymers such as PTFE or silane coupling agents for improving the adhesion.

It is also possible to form a film on a copper foil which is used as a double-layered TAB carrier tape free from any adhesive layer or FPC.

Examples

To further illustrate the present invention in greater detail, the following Examples will be given.

Example 1

To a 10% by weight N,N-dimethylacetamide solution of polybenzimidazole (inherent viscosity = 0.8, hereinafter referred to as "polymer 1") having a repeating unit represented by the following formula:

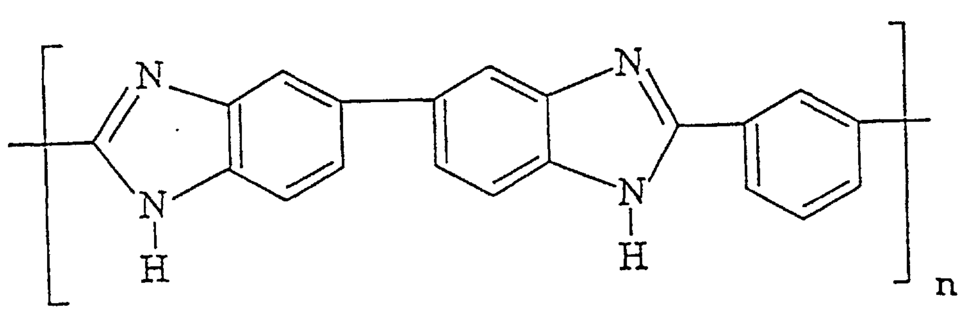

was added diethyl dicarbonate represented by the following formula:

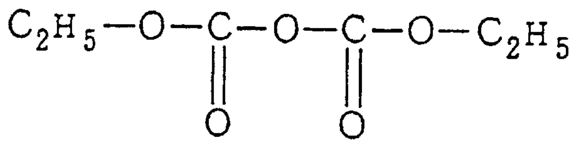

in an amount two equivalents to the polybenzimidazole. The resulting mixture was stirred at room temperature for 2 hours and then heated to 80°C followed by stirring for additional 2 hours. After cooling to room temperature, it was further stirred for 16 hours to thereby give a substituted polybenzimidazole represented by a repeating unit of the following formula.

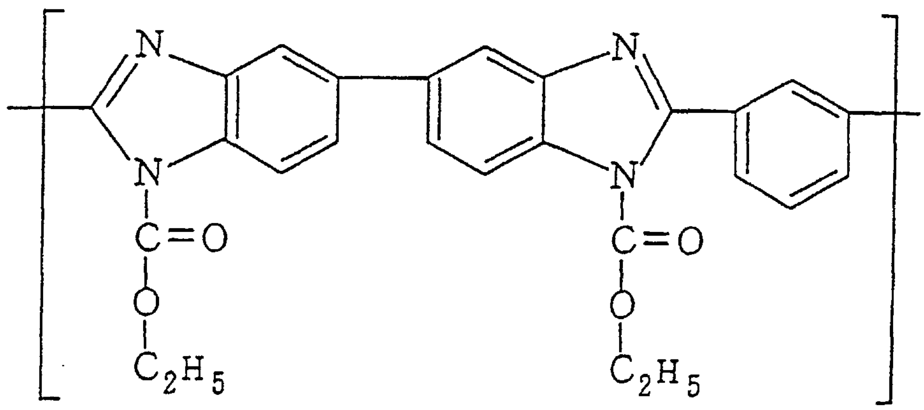

Example 2

An N,N-dimethylacetamide solution of the substituted polybenzimidazole obtained in Example 1 was casted onto a copper plate. Then it was dried and decarboxylated by heating to 350°C to thereby give a film of N-ethylpolybenzimidazole represented by a repeating unit of the following formula (film thickness: 30 μm).

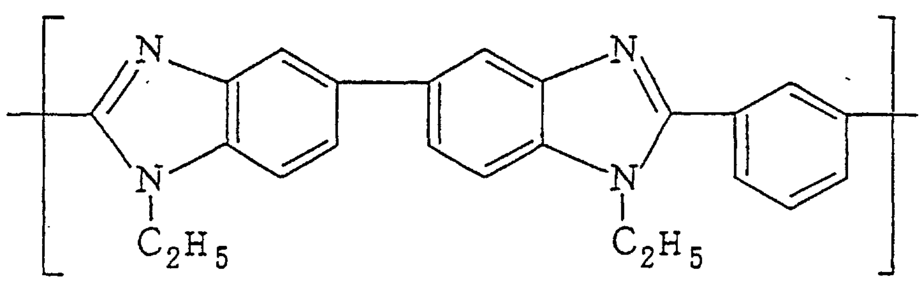

Table 1 shows the equilibrium moisture absorption at a relative humidity of 76% and the volume resistivities (in a dry state and at the equilibrium moisture absorption at a relative humidity of 76%) of the film thus obtained together with the data of the conventional polybenzimidazole.

Example 3

To a 10% by weight N,N-dimethylacetamide solution of the polymer 1 was added 4,4-(hexafluoroisopropylidene) diphthalic anhydride represented by the following formula:

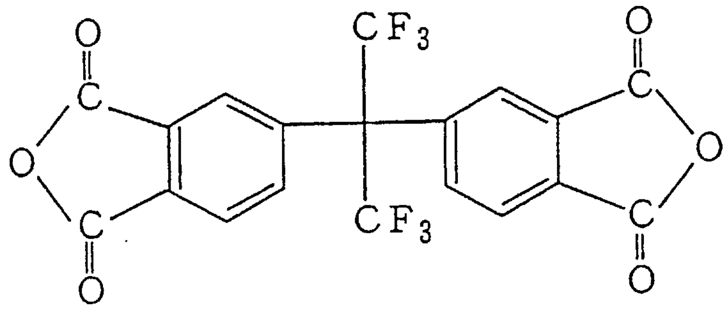

in an amount of 1/6 equivalent to the polybenzimidazole.

An N,N'-dimethylacetamide solution of the polymer thus obtained was casted onto a copper plate and dried by heating to 350°C to thereby give a film of 1 µm in thickness. As Table 1 shows, the film thus obtained was superior to the unsubstituted polybenzimidazole (polymer 1) in volume resistivity.

Example 4

To a 10% by weight N,N-dimethylacetamide solution of the polymer 1 was added a silicone, which had been epoxy-modified at one end, represented by the following formula:

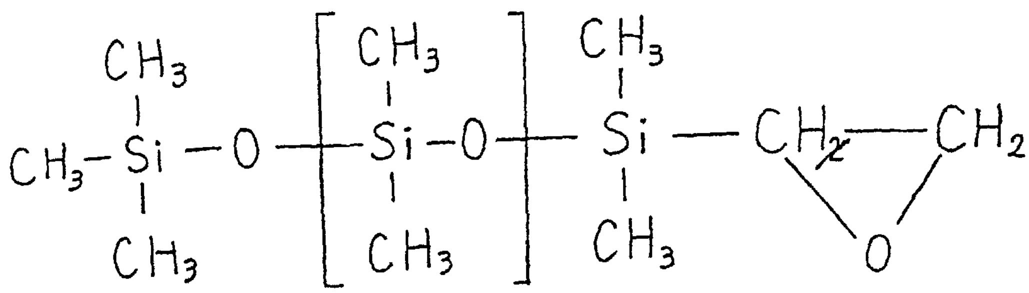

in an amount of 1/50 equivalent to the polybenzimidazole (mean molecular weight: 4,500). After reacting at 150°C for 3 hours, a substituted polybenzimidazole represented by the following formula was obtained.

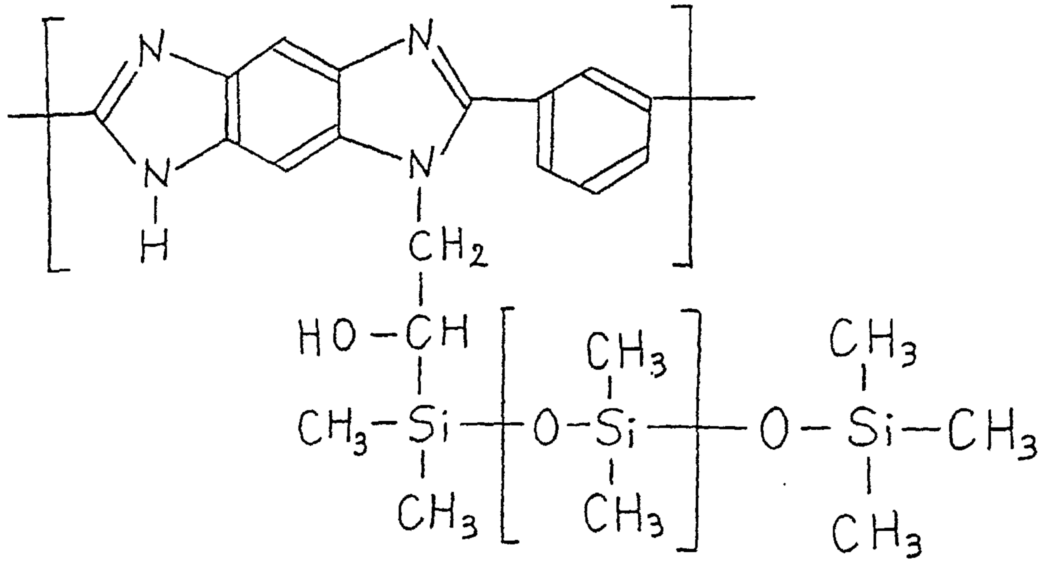

The contact angle of water to the cast film of the substituted polybenzimidazole thus obtained exceeded 90°, which indicated that this material had a strong hydrophobic nature.

Table 1

| | Moisture absorption (76% RH, equilibrated) | Volume resistivity [Ω·cm] | |
|---|---|---|---|
| | | 76% RH, equilibrated | Dry state |
| polybenzimidazole (polymer 1) | 12% | $1 \times 10^{12}$ | $1 \times 10^{15}$ |
| substituted polybenzimidazole of Ex. 2 | 5% | $> 1 \times 10^{16}$ | $> 1 \times 10^{17}$ |
| substituted polybenzimidazole of Ex. 3 | 2.5% | $> 1 \times 10^{16}$ | $> 1 \times 10^{17}$ |

The polymers of the present invention obtained in the above Examples are highly excellent in electrical insulation properties. Further, the polymers according to the present invention have properties similar to those of the conventional polybenzimidazoles having imidazole N-H bonds and are excellent in chemical resistance, heat resistance and strength. Furthermore, these polymers could be applied onto the other various metallic bases and form films thereon. Moreover, they are excellent in adhesion.

Industrial Applicability

As described above, an excellent electrical insulating layer can be formed on the surface of a metallic part by coating the metallic part with a film containing the polymer of the present invention. Thus it becomes possible to provide a metallic part coated with an insulating layer which is excellent in chemical resistance, heat resistance and strength.

## Claims

1. A metallic part coated with a film which contains a polymer having a repeating unit represented by the following structural formula (I):

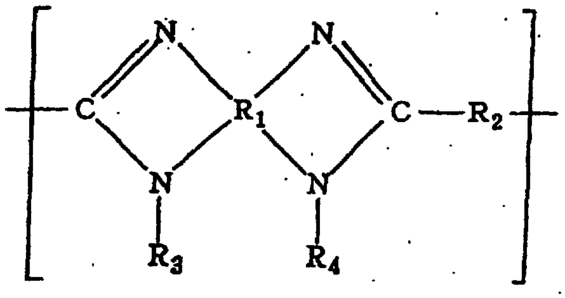

(I)

wherein $R_1$s represent a tetravalent aromatic nucleus which is symmetrically substituted by nitrogen atoms; $R_2$s represent a divalent group selected from among aliphatic, alicyclic and aromatic radicals having from 2 to 20 carbon atoms; each $R_3$ is independently selected from among a hydrogen atom and hydrophobic groups (for example, alkyl and aryl groups) which may contain halogen atoms, silicon atoms, an amino group, or which hydrophobic groups are linked to the nitrogen atom(s) through a divalent group -CO- or -O-;
and each $R_4$ is independently selected from among a hydrogen atom and hydrophobic groups (for example, alkyl and aryl groups) which may contain halogen atoms, silicon atoms, an amino group, or which hydrophobic groups are linked to the nitrogen atom(s) through a divalent group -CO- or -O-;
provided that all of $R_3$s and $R_4$s do not represent hydrogen atoms at the same time; and/or a polymer having a repeating unit represented by the following structural formula (II):

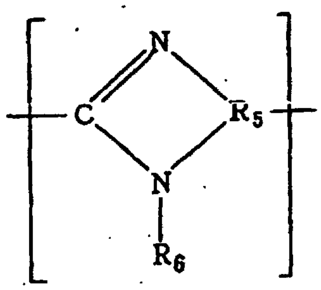

(II)

wherein $R_5$s represent an aromatic nucleus having nitrogen atoms which form a benzimidazole ring in combination with the adjacent carbon atoms of the aromatic nucleus; and each $R_6$ is independently selected from among a hydrogen atom and hydrophobic groups (for example, alkyl and aryl groups) which may contain halogen atoms, silicon atoms, an amino group, or which hydrophobic groups are linked to the nitrogen atom(s) through a divalent group -CO- or -O-; provided that all $R_6$s do not represent hydrogen atoms at the same time, excluding polybenzimidazole membranes on a porous steel plate.

**2.** A metallic part as claimed in Claim 1, wherein $R_3$, $R_4$ and/or $R_6$ are a fluoroalkyl group having from 1 to 4 carbon atoms or an aryl group including it.

**3.** A metallic part as claimed in Claim 1, wherein said polymer is one represented by the following structural formula (III):

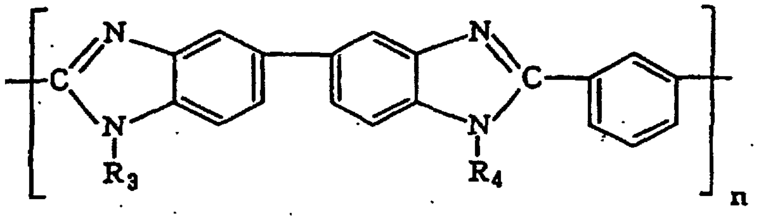

(III)

wherein all $R_3$s are the same and selected from among hydrophobic groups (for example, alkyl and aryl groups) which may contain halogen atoms, silicon atoms, an amino group, or which hydrophobic groups are linked to the nitrogen atom(s) through a divalent group -CO- or -O-;
all $R_4$s are the same and selected from among hydrophobic groups (for example, alkyl and aryl groups)which may contain halogen atoms, silicon atoms, an amino group, or which hydrophobic groups are linked to the nitrogen atom(s) through a divalent group -CO- or -O-;
or one of all $R_3$s and all $R_4$S represents hydrophobic groups such as alkyl or aryl groups which may contain halogen atoms, silicon atoms, an amino group, or which hydrophobic groups are linked to the nitrogen atom(s) through a divalent group -CO- or -O-;
while the other represents hydrogen atoms; and n represents an integer of 2 or above.

**4.** A metallic part as claimed in Claim 3, wherein $R_3$ and/or $R_4$ are fluoroalkyl group having from 1 to 4 carbon atoms or an aryl group including it.

**5.** A process for producing a metallic part **characterized by** using a solution of a polymer which is obtained by reacting a compound represented by the structural formula (IV)

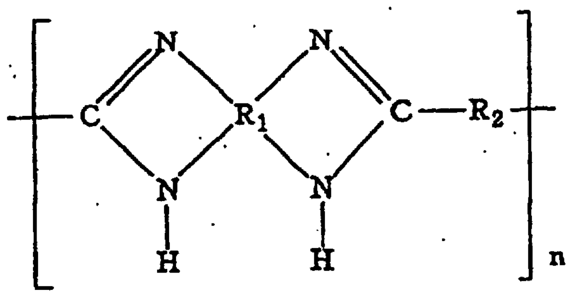

(IV)

wherein $R_1$ and $R_2$ is as defined in claim 1, and n represents an integer of 2 or above; with a pyrocarbonate represented by the following structural formula (V):

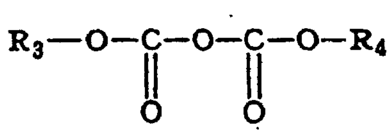

(V)

wherein $R_3$ and $R_4$ may be either the same or different and are as defined in claim 1; provided that $R_3$ and $R_4$ do not represent hydrogen atoms at the same time; and represented by the following structural formula (VIII):

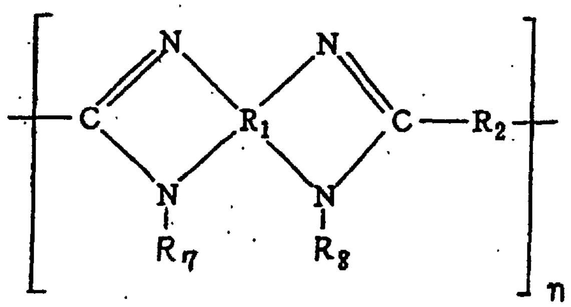

(VIII)

each $R_7$ and $R_8$ is independently selected from among a hydrogen atom and -COOR groups wherein R represents a hydrophobic group (for example, an alkyl or aryl group) which may contain halogen atoms, an amino group, or

silicon atoms, and n represents an integer of 2 or above, provided that all of $R_7$s and $R_8$s do not represent hydrogen atoms at the same time;
and/or a polymer which is obtained by reacting a compound represented by the. structural formula (VI)

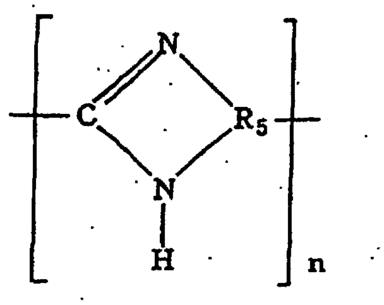

(VI)

wherein $R_5$s represent an aromatic nucleus having nitrogen atoms which form a benzimidazole ring in combination with the adjacent carbon atoms of the aromatic nucleus; and n represents an integer of 2 or above;
with a pyrocarbonate represented by the following structural formula (VII):

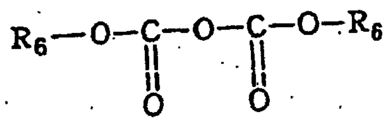

(VII)

wherein each $R_6$ is independently selected from among a hydrogen atom and hydrophobic groups (for example, alkyl and aryl groups) which may contain halogen atoms, silicon atoms, an amino group, or which hydrophobic groups are linked to the nitrogen atom(s) through a divalent group -CO- or -O-;
provided that both $R_6$s do not represent hydrogen atoms at the same time; and represented by the following structural formula (IX):

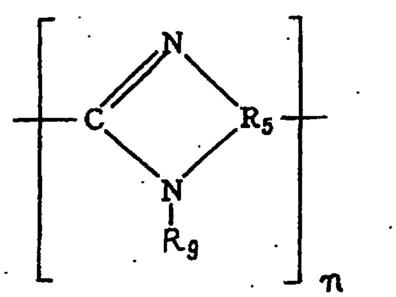

(IX)

each $R_9$ is independently selected from among a hydrogen atom and -COOR groups, wherein R represents a hydrophobic group which may contain halogen atoms, an amino group, or silicon atoms;
provided that all $R_9$s do not represent hydrogen atoms at the same time; forming a film of said polymer on a metallic part excluding polybenzimidazole membranes on a porous steel plate and then thermally treating the metallic part thus coated with the polymer film to thereby form a film of a polymer having a repeating unit represented by the structural formula (I) as given in claim 1 and/or a polymer having a repeating unit represented by the structural formula (II) as given in Claim 1.

## Patentansprüche

1. Metallteil, beschichtet mit einem Film, der ein Polymer mit einer Grundeinheit enthält, die folgende Strukturformel (I) hat:

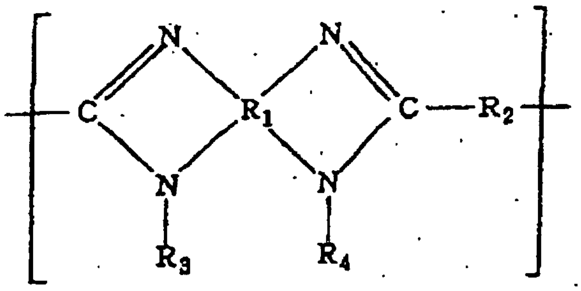

(I)

in welcher die Reste $R_1$ einen vierwertigen, aromatischen, durch Stickstoffatome symmetrisch substituierten Kern darstellen; die Reste $R_2$ eine zweiwertige Gruppe darstellen, die unter aliphatischen, alicyclischen und aromatischen Resten mit 2 bis 20 Kohlenstoffatomen ausgewählt wird; jeder Rest $R_3$ unabhängig unter einem Wasserstoffatom und hydrophoben Gruppen (zum Beispiel Alkyl- und Arylgruppen) ausgewählt wird, die Halogenatome, Siliciumatome, eine Aminogruppe enthalten können oder über eine zweiwertige Gruppe -CO- oder -O- an das Stickstoffatom (die Stickstoffatome) gebunden sind;
und jeder Rest $R_4$ unabhängig unter einem Wasserstoffatom und hydrophoben Gruppen (zum Beispiel Alkyl- und Arylgruppen) ausgewählt wird, die Halogenatome, Siliciumatome, eine Aminogruppe enthalten können oder über eine zweiwertige Gruppe -CO- oder -O- an das Stickstoffatom (die Stickstoffatome) gebunden sind;
wobei nicht alle Reste $R_3$ und $R_4$ gleichzeitig Wasserstoffatome sein können; und/oder ein Polymer mit einer Grundeinheit enthält, die folgende Strukturformel (II) hat:

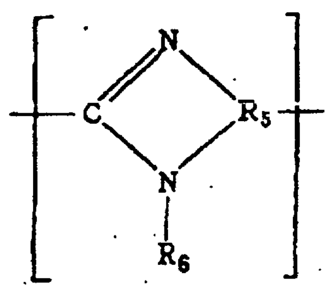

(II)

in welcher die Reste $R_5$ einen aromatischen Kern mit Stickstoffatomen darstellen, die in Verbindung mit den benachbarten Kohlenstoffatomen des aromatischen Kerns einen Benzimidazolring bilden; und jeder Rest $R_6$ unabhängig unter einem Wasserstoffatom und hydrophoben Gruppen (zum Beispiel Alkyl- und Arylgruppen) ausgewählt wird, die Halogenatome, Siliciumatome, eine Aminogruppe enthalten können oder über eine zweiwertige Gruppe -CO- oder -O- an das Stickstoffatom (die Stickstoffatome) gebunden sind; wobei nicht alle Reste $R_6$ gleichzeitig Wasserstoffatome sein können;
unter Ausschluß von Polybenzimidazolmembranen auf einer porösen Stahlplatte.

2. Metallteil gemäß Anspruch 1, wobei $R_3$, $R_4$ und/oder $R_6$ eine Fluoralkylgruppe mit 1 bis 4 Kohlenstoffatomen oder eine diese einschließende Arylgruppe sind.

3. Metallteil gemäß Anspruch 1, wobei das genannte Polymer folgende Strukturformel (III) hat:

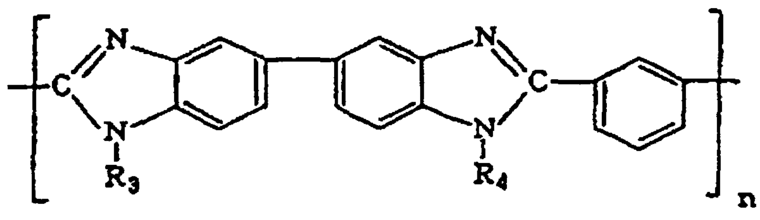

(III)

in welcher alle Reste $R_3$ identisch sind und unter hydrophoben Gruppen (zum Beispiel Alkyl- und Arylgruppen) ausgewählt werden, die Halogenatome, Siliciumatome, eine Aminogruppe enthalten können oder über eine zweiwertige Gruppe -CO- oder -O- an das Stickstoffatom (die Stickstoffatome) gebunden sind;
alle Reste $R_4$ identisch sind und unter hydrophoben Gruppen (zum Beispiel Alkyl- und Arylgruppen) ausgewählt werden, die Halogenatome, Siliciumatome, eine Aminogruppe enthalten können oder über eine zweiwertige Gruppe -CO- oder -O- an das Stickstoffatom (die Stickstoffatome) gebunden sind;
oder einer von allen Resten $R_3$ und allen Resten $R_4$ hydrophobe Gruppen wie Alkyl- oder Arylgruppen darstellt, die Halogenatome, Siliciumatome, eine Aminogruppe enthalten können oder über eine zweiwertige Gruppe -CO- oder -O- an das Stickstoffatom (die Stickstoffatome) gebunden sind;
während der andere Rest Wasserstoffatome darstellt und n 2 oder eine höhere ganze Zahl ist.

**4.** Metallteil gemäß Anspruch 3, wobei $R_3$ und/oder $R_4$ eine Fluoralkylgruppe mit 1 bis 4 Kohlenstoffatomen oder eine diese einschließende Arylgruppe sind.

**5.** Verfahren zur Herstellung eines Metallteils, **gekennzeichnet durch** die Verwendung einer Lösung eines Polymers, erhalten **durch** Umsetzung einer Verbindung der Strukturformel (IV):

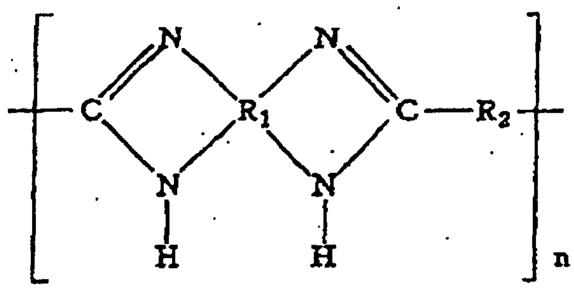

(IV)

in welcher $R_1$ und $R_2$ die in Anspruch 1 zugewiesenen Bedeutungen zukommen und n 2 oder eine höhere ganze Zahl ist;
mit einem Pyrocarbonat der folgenden Strukturformel (V):

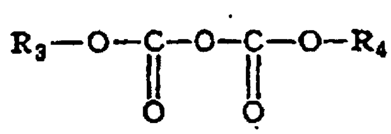

(V)

in welcher $R_3$ und $R_4$ identisch oder voneinander verschieden sein können und die in Anspruch 1 zugewiesenen Bedeutungen haben; wobei $R_3$ und $R_4$ nicht gleichzeitig Wasserstoffatome sein können;
und dargestellt **durch** folgende Strukturformel (VIII):

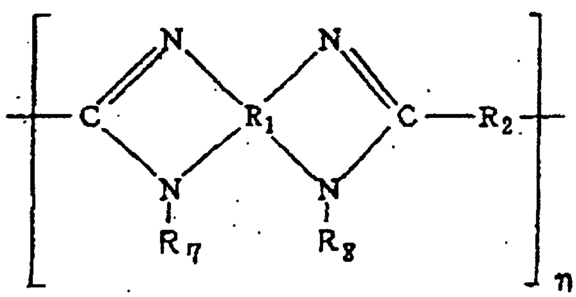

(VIII)

wobei jeder Rest $R_7$ und $R_8$ unabhängig unter einem Wasserstoffatom und -COOR-Gruppen ausgewählt wird, bei

denen R eine hydrophobe Gruppe (zum Beispiel eine Alkyl- oder Arylgruppe) darstellt, die Halogenatome, eine Aminogruppe oder Siliciumatome enthalten kann und n 2 oder eine höhere ganze Zahl ist, wobei nicht alle Reste $R_7$ und $R_8$ gleichzeitig Wasserstoffatome sein können;
und/oder eines Polymers, erhalten **durch** Umsetzung einer Verbindung der Strukturformel (VI):

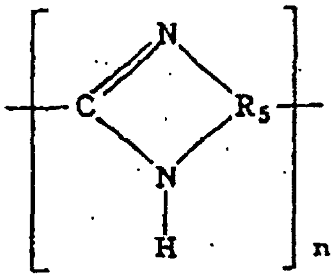

(VI)

in welcher die Reste $R_5$ einen aromatischen Kern mit Stickstoffatomen darstellen, die in Verbindung mit den benachbarten Kohlenstoffatomen des aromatischen Kerns einen Benzimidazolring bilden; und n 2 oder eine höhere ganze Zahl ist;
mit einem Pyrocarbonat der folgenden Strukturformel (VII):

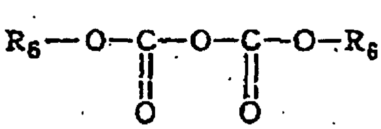

(VII)

in welcher jeder Rest $R_6$ unabhängig unter einem Wasserstoffatom und hydrophoben Gruppen (zum Beispiel Alkyl- und Arylgruppen) ausgewählt wird, die Halogenatome, Siliciumatome, eine Aminogruppe enthalten können oder über eine zweiwertige Gruppe -CO- oder -O- an das Stickstoffatom (die Stickstoffatome) gebunden sind;
wobei nicht beide Reste $R_6$ gleichzeitig Wasserstoffatome sein können;
und dargestellt **durch** folgende Strukturformel (IX):

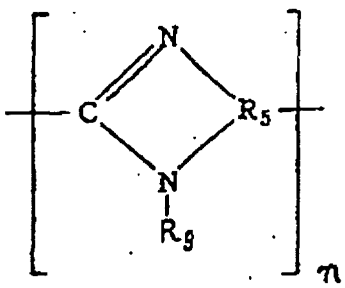

(IX)

in welcher jeder Rest $R_9$ unabhängig unter einem Wasserstoffatom und -COOR-Gruppen ausgewählt wird, bei denen R eine hydrophobe Gruppe darstellt, die Halogenatome, eine Aminogruppe oder Siliciumatome enthalten kann;
wobei nicht alle Reste $R_9$ gleichzeitig Wasserstoffatome sein können;
wodurch ein Film aus dem genannten Polymer auf einem Metallteil gebildet wird, unter Ausschluß von Polybenzimidazolmembranen auf einer porösen Stahlplatte, und danach eine Wärmebehandlung des mit dem Polymerfilm beschichteten Metallteils erfolgt, so daß ein Film aus einem Polymer mit Grundeinheiten entsteht, welche **durch** die in Anspruch 1 aufgeführte Strukturformel (I) dargestellt werden, und/oder aus einem Polymer mit Grundeinheiten, welche **durch** die in Anspruch 1 aufgeführte Strukturformel (II) dargestellt werden.

**Revendications**

1. Pièce métallique revêtue d'un film qui renferme un polymère présentant une unité récurrente représentée par la formule développée suivante (I) :

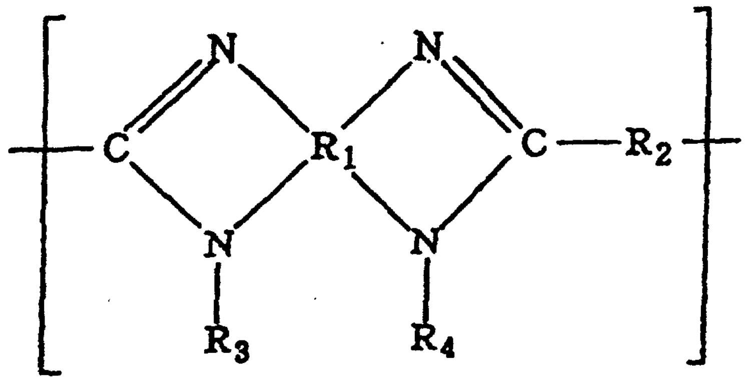

(I)

où les $R_1$ représentent un noyau aromatique tétravalent qui est substitué de façon symétrique par des atomes d'azote ; les $R_2$ représentent un groupe bivalent pris parmi les radicaux aliphatiques, alicycliques et aromatiques présentant 2 à 20 atomes de carbone ; chaque $R_3$ est pris indépendamment parmi un atome d'hydrogène et des groupes hydrophobes (par exemple des groupes alkyles et aryles) qui peuvent présenter des atomes d'halogène, des atomes de silicium, un groupe amino ou lesdits groupes hydrophobes sont liés à (aux) atome(s) d'azote par un groupe bivalent -CO- ou -O- ;

et chaque $R_4$ est pris indépendamment parmi un atome d'hydrogène et des groupes hydrophobes (par exemple des groupes alkyles et aryles) qui peuvent présenter des atomes d'halogène, des atomes de silicium, un groupe amino ou lesdits groupes hydrophobes sont liés au(x) atome(s) d'azote par un groupe bivalent -CO- ou -O- ;

à condition que tous les $R_3$ et $R_4$ ne représentent pas des atomes d'hydrogène en même temps ; et/ou un polymère comprenant une unité récurrente représentée par la formule développée (II) suivante :

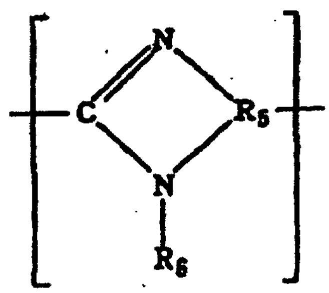

(II)

où les $R_5$ représentent un noyau aromatique présentant des atomes d'azote qui forment un cycle benzimidazolique en combinaison avec les atomes de carbone adjacents du noyau aromatique ; et chaque $R_6$ est pris indépendamment parmi un atome d'hydrogène et des groupes hydrophobes (par exemple des groupes alkyles et aryles) qui peuvent présenter des atomes d'halogènes, des atomes de silicium, un groupe amino ou lesdits groupes hydrophobes sont liés au(x) atome(s) d'azote par un groupe bivalent -CO- ou -O- ;

à condition que tous les $R_6$ ne représentent pas des atomes d'hydrogène en même temps, à l'exclusion de membranes de benzimidazole sur une plaque d'acier poreux.

2. Pièce métallique selon la revendication 1, où $R_3$, $R_4$ et/ou $R_6$ représentent un groupe fluoroalkyle présentant 1 à 4 atomes de carbone ou un groupe aryle le comprenant.

3. Pièce métallique selon la revendication 1, où ledit polymère est un tel représenté par la formule développée (III) suivante :

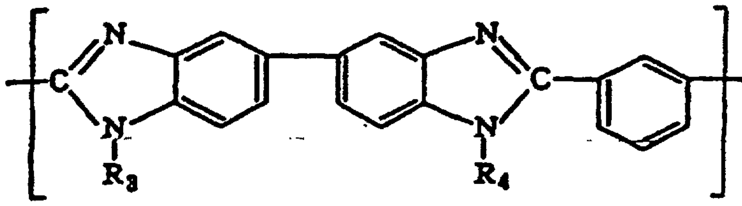

(III)

où tous les $R_3$ sont identiques et pris parmi les groupes hydrophobes (par exemple des groupes alkyles et aryles) qui peuvent présenter des atomes d'halogène, des atomes de silicium, un groupe amino ou lesdits groupes hydrophobes sont liés à (aux) atome(s) d'azote par un groupe bivalent -CO- ou -O- ;

et tous les $R_4$ sont identiques et pris parmi les groupes hydrophobes (par exemple des groupes alkyles et aryles) qui peuvent présenter des atomes d'halogène, des atomes de silicium, un groupe amino ou lesdits groupes hydrophobes sont liés au(x) atome(s) d'azote par un groupe bivalent -CO- ou -O- ;

ou un de tous les $R_3$ et $R_4$ ne représente pas des groupes hydrophobes tels que des groupes alkyles et aryles qui peuvent présenter des atomes d'halogène, des atomes de silicium, un groupe amino ou lesdits groupes hydrophobes sont liés au(x) atome(s) d'azote par un groupe bivalent -CO- ou -O- ;

alors que les autres représentent des atomes d'hydrogène ; et n est un entier de 2 ou plus de 2.

4. Pièce métallique selon la revendication 3, où $R_3$ et/ou $R_4$ représentent un groupe fluoralkyle présentant 1 à 4 atomes de carbone ou un groupe aryle le comprenant.

5. Procédé de production d'une pièce métallique **caractérisé par** utilisation d'une solution d'un polymère qui est obtenu par réaction d'un composé représenté par la formule développée (IV)

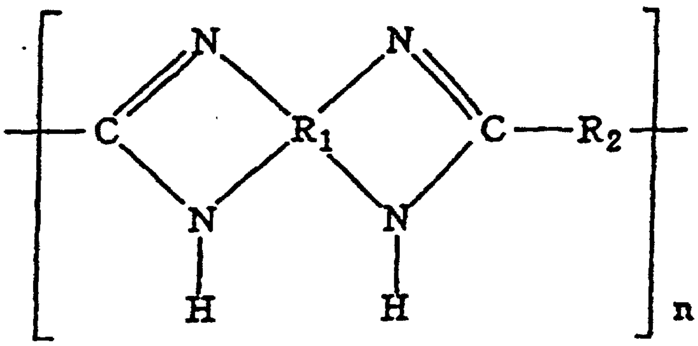

(IV)

où $R_1$ et $R_2$ sont définis à la revendication 1, et n est un entier de 2 ou plus de 2 ;
sur un pyrocarbonate représenté par la formule développée (V) suivante :

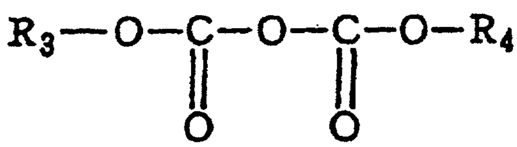

(V)

où $R_3$ et $R_4$ peuvent chacun être identiques ou différents et sont définis comme à la revendication 1;

à condition que $R_3$ et $R_4$ ne représentent pas des atomes d'hydrogène en même temps ; et représenté par la formule développée (VIII) :

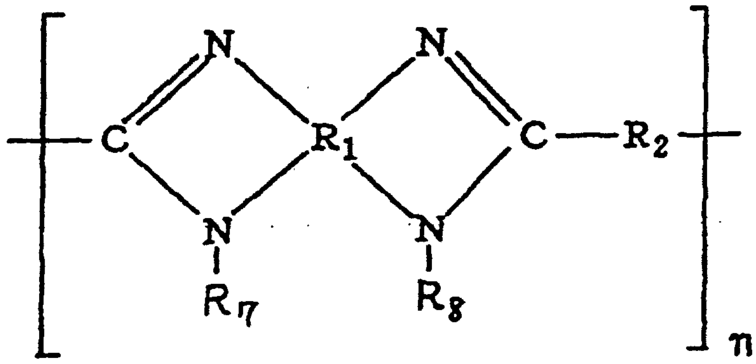

(VIII)

où chaque $R_7$ et $R_8$ sont pris indépendamment parmi un atome d'hydrogène et des groupes -COOR, où R représente un groupe hydrophobe (par exemple des groupes alkyles et aryles) qui peuvent présenter des atomes d'halogène, un groupe amino ou des atomes de silicium, et n est un entier de 2 ou plus de 2, à condition que tous les $R_7$ et $R_8$ ne représentent pas des atomes d'hydrogène en même temps ;

et/ou un polymère obtenu par réaction d'un composé représenté par la formule développée (VI) :

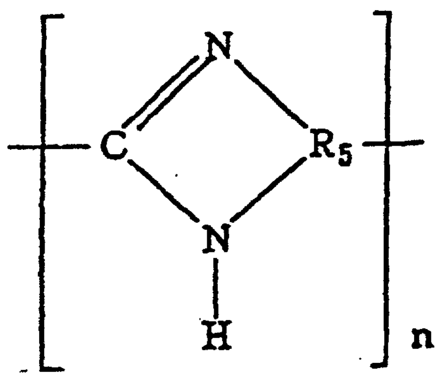

(VI)

où les $R_5$ représentent un noyau aromatique présentant des atomes d'azote qui forment un cycle benzimidazolique en combinaison avec les atomes de carbone adjacents du noyau aromatique ; et n est un entier de 2 ou plus de 2 ;

sur un pyrocarbonate représenté par la formule développée (VII) suivante :

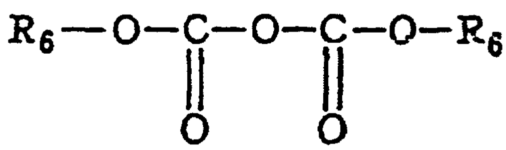

(VII)

dans laquelle chaque $R_6$ est pris indépendamment parmi un atome d'hydrogène et des groupes hydrophobes (par exemple des groupes alkyles et aryles) qui peuvent présenter des atomes d'halogène, des atomes de silicium, un groupe amino ou lesdits groupes hydrophobes sont liés à (aux) atome(s) d'azote par un groupe bivalent -CO- ou -O- ;

à condition que tous les $R_6$ ne représentent pas des atomes d'hydrogène en même temps ; et

représenté par la formule développée (IX) suivante :

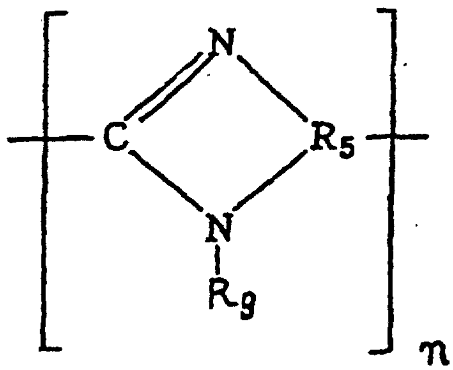

(IX)

chaque $R_9$ est pris indépendamment parmi un atome d'hydrogène et des groupes -COOR, où R représente un groupe hydrophobe et qui peut présenter des atomes d'halogène, un groupe amino ou des atomes de silicium ;

à condition que les $R_9$ ne représentent pas des atomes d'hydrogène en même temps ;

en formant un film dudit polymère sur une pièce métallique en excluant des membranes de polybenzimidazole sur une plaque d'acier poreux et ensuite par traitement thermique de la pièce métallique ainsi revêtue du film polymère afin de former de cette façon un film d'un polymère présentant une unité récurrente représentée par la formule développée (I) telle que donnée à l'exemple 1 et/ou un polymère présentant une unité récurrente représentée par la formule développée (II) telle que donnée à la revendication 1.